# EUROPÄISCHE PATENTSCHRIFT

(11) **EP 1 295 889 B1**
(45) Veröffentlichungstag und Bekanntmachung des Hinweises auf die Patenterteilung: **11.10.2006**
(21) Anmeldenummer: 02018836.3
(22) Anmeldetag: 23.08.2002
(51) Int. Cl.: C07F 7/18

(54) **Verfahren zur Herstellung von Aminoalkylsilanen**
Process for preparing aminoalkylsilanes
Procédé de préparation d'aminoalkylsilanes

(30) Priorität: 19.09.2001 DE 10146087
(43) Veröffentlichungstag der Anmeldung: 26.03.2003
(73) Patentinhaber: Degussa AG, 40474 Düsseldorf (DE)
(72) Erfinder: Kahsnitz, John Dr., 45721 Haltern am See (DE); Pauli, Ingo Dr., 36693 Mobile, Alabama (US); Tapley, Jeffrey, 2018 Antwerpen (BE); Hirsh, John, 36526 Daphne, Alabama (US); Zanthoff, Horst-Werner Dr., 45481 Mülheim (DE); Kropfgans, Frank Dr., 79618 Rheinfelden (DE)

(56) Entgegenhaltungen:
- EP-A- 0 849 271

## Beschreibung

Die vorliegende Erfindung betrifft ein verbessertes Verfahren zur Herstellung von Aminoalkylsilanen.

Bekannt ist ein Verfahren zur Herstellung von Aminoalkylsilanen, beispielsweise 3-Aminopropyltriethoxysilan (AMEO), wobei ein Chloralkylsilan, beispielsweise 3-Chlorpropyltriethoxysilan (CPTEO), mit einem Überschuss an Ammoniak oder einem organischen Amin in flüssiger Phase, beispielsweise mit Ammoniak bei T = 90 °C, p = 50 bar absolut, Zeit = 6 h, batchweise umgesetzt wird. Nachfolgend wird abgedampft bzw. eingedampft und entspannt, wobei überschüssiger Ammoniak entweicht und Ammoniumchlorid kristallin anfällt. Der Abdampfprozess erfordert in der Regel einen Zeitaufwand von mehr als 10 Stunden. Die Abtrennung des Ammoniumchlorids vom Rohprodukt erfolgt üblicherweise durch Filtration. Das Rohprodukt wird nachfolgend destilliert (DE-OS 27 49 316, DE-OS 27 53 124).

Bei dem besagten Verfahren ist es von Nachteil, dass beim Entspannen der Produktmischung Anbackungen, die aus Ammoniumchloriden oder Aminhydrochloriden bestehen, an der Wand des Synthesereaktors sowie am Rührwerk auftreten und den Wärmeübergang im Hinblick auf den Abdampfprozess nachteilig beeinflussen. Die Ablagerungen und Anbackungen erfordern häufige Stillstandzeiten der Anlage, wobei der Synthesereaktor abgestellt, entleert, geöffnet, zum Lösen der Ammoniumsalzkrusten mit Wasser gefüllt, bzw. zusätzlich mechanisch von Anbackungen befreit, anschließend getrocknet und verschlossen werden muss.

Ferner ist von Nachteil, dass nach besagtem Verfahren erhaltenes Produkt noch deutliche Anteile an hydrolysierbarem sowie an nicht hydrolysierbarem Chlorid enthält. Eine Minderung der Chloridgehalte im Produkt erfordert weitere aufwendige Nachbehandlungsschritte (EP 0 741 137 A1, EP 0 702 017 A1).

Weiterhin ist aus EP 0 849 271 A2 bekannt, 3-Aminopropyltrialkoxysilane durch kontinuierliche Fahrweise aus 3-Chlorpropyltrialkoxysilanen und Ammoniak herzustellen.

Nachteilig hierbei ist jedoch, dass selbst bei einem 100-fachen Ammoniak-Überschuss bezüglich Chlorpropyltrialkoxysilan und einer zusätzlichen Nachreaktion bei 120 °C nur maximal 95 % Ausbeute an Rohsilangemisch aus primären, sekundären und tertiären Aminosilanen erhalten werden.

Zur Produktseparation kann weiterhin neben der Destillation und Abtrennung von ausgefallenem Ammoniumchlorid eine zusätzliche Druckextraktion erforderlich sein.

Somit ergab sich die Aufgabe, ein weiteres Verfahren zur Herstellung von Aminoalkylsilanen bereitzustellen.

Die Aufgabe wird erfindungsgemäß entsprechend den Angaben der Patentansprüche gelöst.

Überraschenderweise wurde gefunden, dass man in einfacher und besonders wirtschaftlicher Weise Aminoalkylsilane der allgemeinen Formel I

H₂N - (CH₂)_{y} - Si(OR)₃₋ₙR¹ ₙ (I),

mit
- R =: linearer, verzweigter oder cyclischer Alkylrest mit 1 bis 8 C-Atomen oder Arylrest, vorzugsweise Methyl oder Ethyl,
- R¹ =: linearer, verzweigter oder cyclischer Alkylrest mit 1 bis 8 C-Atomen oder Arylrest, vorzugsweise Methyl,
- y =: 2 oder 3 oder 4 und
- n =: 0 oder 1 oder 2 oder 3,
insbesondere 3-Aminopropyltrimethoxysilan (AMMO) oder 3-Aminopropyltriethoxysilan (AMEO),
herstellen kann, wenn man ein Halogenalkylsilan der allgemeinen Formel II

Cl - (CH₂)_{y} - Si(OR)₃₋ₙR¹ ₙ (II),

mit
- R =: Alkylrest mit 1 bis 8 C-Atomen oder Arylrest,
- R¹ =: Alkylrest mit 1 bis 8 C-Atomen oder Arylrest,
- y =: 2 oder 3 oder 4 und
- n =: 0 oder 1 oder 2 oder 3,
zum Beispiel 3-Chlorpropyltriethoxysilan (CPTEO),
mit überschüssigem Ammoniak in flüssiger Phase in einem Kreislaufreaktor, der nachfolgend auch als Schlaufenreaktor bezeichnet wird, insbesondere einem Strahldüsenschlaufenreaktor, umsetzt.

Durch die Verwendung eines Schlaufenreaktors für die Durchführung der Umsetzung eines Chloralkylsilans mit Ammoniak in flüssiger Phase kann im Vergleich zu einem Reaktor (Rührkessel) nach dem Stand der Technik eine deutliche Verbesserung der Vermischung der Reaktions- bzw. Produktkomponenten und eine ausgezeichnete Temperaturkontrolle erzielt werden. Durch die bei der Umsetzung erfindungsgemäß erzielte Mischwirkung kann darüber hinaus auch die Neigung zu Anbackungen von Ammoniumchlorid weiter gemindert werden, was aufgrund geringerer Stillstandzeiten der Anlage als besonders wirtschaftlich und damit als zusätzlicher Vorteil zu verbuchen ist.

In der Regel führt man das vorliegende Verfahren diskontinuierlich, d. h. batchweise durch. Man kann das vorliegende Verfahren aber auch kontinuierlich betreiben.

Nach dem vorliegenden Verfahren erhaltenes Produkt zeichnet sich durch einen besonders geringen Gehalt an hydrolysierbarem sowie nicht hydrolysierbarem Chlorid aus. Dadurch kann in vorteilhafter Weise auf weitere Nachbehandlungsschritte verzichtet werden.

Gegenstand der vorliegenden Erfindung ist daher ein Verfahren zur Herstellung eines Aminoalkylsilans der allgemeinen Formel I

H₂N - (CH₂)_{y} - Si(OR)₃₋ₙR¹ ₙ (I),

mit
- R =: Alkylrest mit 1 bis 8 C-Atomen oder Arylrest,
- R¹ =: Alkylrest mit 1 bis 8 C-Atomen oder Arylrest,
- y =: 2 oder 3 oder 4 und
- n =: 0 oder 1 oder 2 oder 3,
durch Umsetzung eines Chloralkylsilans der allgemeinen Formel II

Cl - (CH₂)_{y} - Si(OR)₃₋ₙR¹ ₙ (II),

mit
- R =: Alkylrest mit 1 bis 8 C-Atomen oder Arylrest,
- R¹ =: Alkylrest mit 1 bis 8 C-Atomen oder Arylrest,
- y =: 2 oder 3 oder 4 und
- n =: 0 oder 1 oder 2 oder 3,
mit überschüssigem Ammoniak in flüssiger Phase und nachfolgender Aufarbeitung des Produktgemischs, das dadurch gekennzeichnet ist,
dass man die Umsetzung in einem Schlaufenreaktor durchführt.

Gegenstand der vorliegenden Erfindung ist ferner die Verwendung eines Schlaufenreaktors für die Herstellung eines Aminoalkylalkoxysilans gemäß Formel I durch Umsetzung eines Chloralkylsilans gemäß Formel II mit Ammoniak nach mindestens einem der Ansprüche 1 bis 6.

Dabei wird das erfindungsgemäße Verfahren bevorzugt so durchgeführt, dass man
- in einer ersten Verfahrensstufe das Chloralkylsilan mit überschüssigem Ammoniak in flüssiger Phase in einem Schlaufenreaktor umsetzt, Ammoniak unter vermindertem Druck abdampft, wobei ein wesentlicher Teil von überschüssigem Ammoniak entweicht und Ammoniumchlorid vollständig in flüssiger Phase gelöst bleibt,
- das Produktgemisch aus der ersten Verfahrensstufe in eine zweite Verfahrensstufe überführt, die auf einem niedrigeren Druckniveau als die erste Verfahrensstufe betrieben wird, Ammoniumchlorid auskristallisiert,
- nachfolgend kristallines Ammoniumchlorid vom Rohprodukt abtrennt und
- das Rohprodukt destillativ aufarbeitet.

Als Organosilane der allgemeinen Formel II werden bei dem erfindungsgemäßen Verfahren bevorzugt 3-Chloralkylalkoxysilane eingesetzt, wie z. B. 3-Chlorpropyltriethoxysilan, 3-Chlorpropyltrimethoxysilan, 3-Chlorpropylmethyldimethoxysilan, 3-Chlorpropylmethyldiethoxysilan. Man kann aber auch andere Chloralkylalkoxysilane, wie z. B. 3-Chlorpropyldiethylmethoxysilan oder 3-Chlorpropylethylpropylethoxysilan, beim vorliegenden Verfahren einsetzen.

Als N-haltige Komponente setzt man beim erfindungsgemäßen Verfahren bevorzugt Ammoniak ein. Man kann aber auch beispielsweise Methylamin einsetzen, so kann man bei Einsatz von 3-Chlorpropyltrimethoxysilan zu N-Methyl-3-aminopropyltrimethoxysilan gelangen.

Nach dem erfindungsgemäßen Verfahren können als Produkte mit vergleichsweise hoher Ausbeute und darüber hinaus in einfacher und besonders wirtschaftlicher Weise vorzugsweise - aber nicht ausschließlich - 3-Aminopropyltriethoxysilan, 3-Aminopropyltrimethoxysilan, 3-Aminopropylmethyldiethoxysilan sowie 3-Aminopropylmethyldimethoxysilan hergestellt werden.

Zur Durchführung des erfindungsgemäßen Verfahrens wird dem Schlaufenreaktor im Allgemeinen zunächst das Organosilan der allgemeinen Formel II und Ammoniak in flüssiger Form zugeführt. Geeigneterweise stellt man dabei ein molares Verhältnis von Chloralkylsilan zu Ammoniak von 1 : 10 bis 1 : 50 ein. Die Umsetzung in der ersten Verfahrensstufe, d. h. im Schlaufenreaktor, erfolgt in der Regel bei einem Druck von 40 bis < 100 bar abs. und einer Temperatur von 85 bis 140 °C. Die Umsetzung verläuft im Allgemeinen nahezu vollständig. Der Umsatz kann in der Regel über die Verweilzeit eingestellt werden. Vorzugsweise führt man die Umsetzung beim erfindungsgemäßen Verfahren über 2 bis 12 Stunden, besonders vorzugsweise über 4 bis 6 Stunden, durch. Bevorzugt herrscht dabei ein Druck von 45 bis 75 bar absolut, besonders vorzugsweise 50 bis 62 bar absolut, vor. Geeigneter Weise betreibt man die erfindungsgemäße Umsetzung bei einer Temperatur im Bereich von 85 bis 105 °C, insbesondere bei 88 bis 98 °C, und dem sich dabei für Flüssigphasenbedingungen einstellenden Druck. Üblicherweise werden so Umsätze, bezogen auf das eingesetzte Chloralkylsilan, von ≥ 99,95 Gew.-%, insbesondere ≥ 99,98 Gew.-%, erzielt. In der Regel bleibt Ammoniumchlorid in flüssiger Phase nahezu vollständig gelöst. Bevorzugt verbleiben mehr als 99 %, besonders vorzugsweise 99,9 bis 100 % des bei der Umsetzung entstandenen Ammoniumchlorids in der Flüssigphase der ersten Stufe gelöst. Das so erhaltene Produktgemisch kann nun beispielsweise in die zweite Verfahrensstufe überführt werden, wobei die zweite Verfahrensstufe bei einem deutlich niedrigeren Druck als die erste Verfahrensstufe betrieben wird. Geeigneterweise werden dabei bereits nennenswerte Mengen an Ammoniak abgeflasht, beispielsweise 50 bis 80 Gew.-% des überschüssigen Ammoniaks bei einer Betriebsweise für den Übergang von 50 auf 15 bis 20 bar absolut.

Die zweite Verfahrensstufe wird bevorzugt bei Drücken von > 10 bis < 50 bar abs., besonders vorzugsweise 11 bis 35 bar absolut, ganz besonders vorzugsweise 13 bis 25 bar absolut, insbesondere 15 bis 20 bar absolut, und einer Temperatur von > 10 bis < 110 °C, besonders vorzugsweise 20 bis 95 °C, ganz besonders vorzugsweise 30 bis 85 °C, insbesondere 35 bis 80 °C, betrieben, sodass auch hier das Ammoniumchlorid zunächst quasi vollständig in Flüssigphase gelöst bleibt und man dadurch Probleme aus dem Anfall von Feststoff in vorteilhafter Weise vermeiden kann. Im Allgemeinen ergeben sich dabei die Abdampfzeiten aus den Ammoniaküberschussmengen der Reaktion und den zur Verfügung gestellten Abdampfeinrichtungen, Verdampferflächen etc. sowie der Konstruktion der verwendeten Anlage.

In der Regel erfolgt anschließend die Kristallisation des Chlorids. Dabei arbeitet man geeigneterweise bei einem Druck unterhalb des Enddrucks nach dem Abdampfschritt, vorzugsweise bei 1 bis 6 bar abs., wobei die Löslichkeit von Ammoniumchlorid im Produktgemisch unterschritten und auf besonders schonende Weise in kristalliner Form anfällt. Die Betriebstemperatur in der Kristallisationsstufe liegt in der Regel im Bereich von 20 bis 60 °C. Der Feststoff kann in an sich bekannter Weise abgetrennt ("Salzabtrennung") und die Flüssigphase nachfolgend destillativ aufgearbeitet werden.

Erfindungsgemäß hergestellte Aminoalkylalkoxysilane enthalten in vorteilhafter Weise in der Regel < 50 Gew.-ppm an hydrolysierbarem Chlorid und < 100 Gew.-ppm an nicht hydrolysierbarem Chlorid.

Aufbau und die Betriebsweise eines Schlaufenreaktors im Allgemeinen sind beispielsweise Ullmann's Encyclopedia, 6^{th} Edition (1999), zu entnehmen.

Im Allgemeinen führt man das erfindungsgemäße Verfahren wie folgt aus:

Ein Organosilan der allgemeinen Formel II wird mit überschüssigem Ammoniak in einem Schlaufenreaktor in flüssiger Phase umgesetzt. Anschließend kann man Ammoniak abdampfen, Ammoniumchlorid auskristallisieren und vom Rohprodukt abtrennen. Die Trennung kann beispielsweise durch Filtration erfolgen. Anschließend kann das so erhaltene Rohprodukt destillativ aufgearbeitet werden. Die Maßnahmen der Schritte "Salzabtrennung" und "Destillation" sind dem Fachmann an sich bekannt.

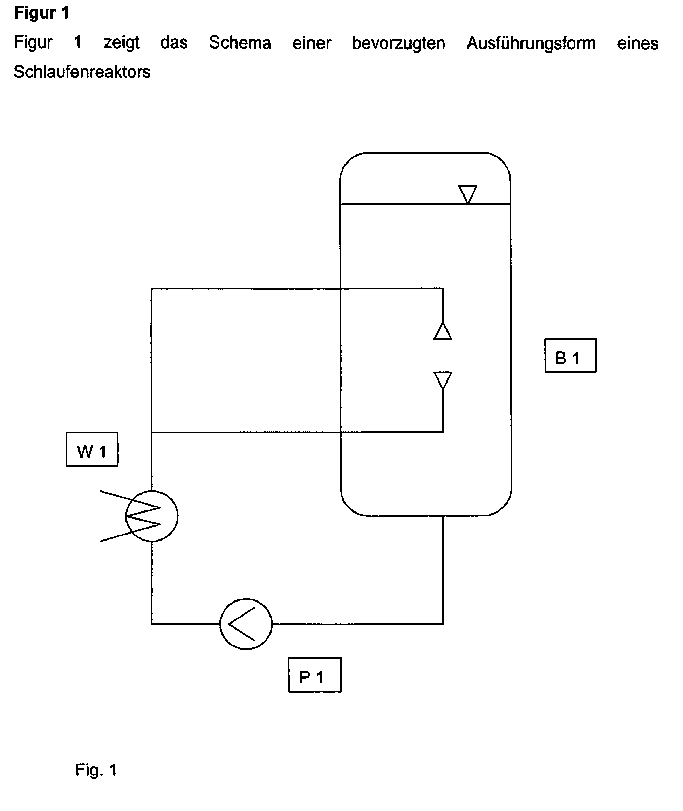

Das Kernstück des erfindungsgemäßen Verfahrens ist der Schlaufenreaktor und die darin stattfindende Umsetzung. Der Schlaufenreaktor, vgl. Fig. 1, kann beispielsweise aus einem Kreislaufreaktor (B 1), einem Wärmetauscher (W 1) und einer Pumpe (P 1) bestehen. Das Reaktionsvolumen wird in der Regel durch die Einzelapparate und die verbindenden Rohrleitungen vorgegeben und stellt als Ganzes den Schlaufenreaktor dar. Durch die Anordnung von Injektoren im Vorlagebehälter (B 1) kann der Inhalt des so genannten Strahldüsenschlaufenreaktors mit Hilfe des Treibstrahls aus der Pumpe (P 1) zusätzlich und intensiv durchmischt werden. Hierbei können Umwälzverhältnisse von 4/1 (angesaugte Menge/Strahlmenge) ohne größeren Aufwand realisiert werden. Bevorzugt wird der Einsatz von zwei gegensätzlich orientierten Strahldüsen, bei denen sich der summarische Strömungsimpuls in weiterer Durchmischung aufhebt.

Zum Anfahren wird der Schlaufenreaktor in der Regel zunächst mit Ammoniak befüllt. Dann kommt der zweite Rohstoff, beispielsweise CPTEO, dazu. Das Reaktorsystem wird danach geschlossen und kann mittels externem Wärmetauscher (W 1) auf Reaktionstemperatur gebracht werden, beispielsweise auf 85 bis 110 °C. Hierzu wird üblicherweise die Pumpe (P 1) in Betrieb genommen. Diese bleibt im Allgemeinen während des gesamten Reaktionsverlaufs in Betrieb. Bei den oben genannten Reaktionstemperaturen stellt sich vorzugsweise ein Druck von 40 bis 100 bar absolut ein. Für eine hohe Reaktionsgeschwindigkeit ist in der Regel eine hohe Temperatur erforderlich. Hiermit ist zwangsweise über die Temperaturabhängigkeit des Dampfdrucks von Ammoniak ein hoher Druck gekoppelt. Die Dichtungsfunktion ist bei einem Schlaufenreaktor gegenüber einem Rührkessel meist deutlich einfacher zu gestalten und somit vorteilhaft, da keine Rührwelle durch ein Gehäuse geführt werden muss. Ferner kann die ansonsten auch übliche Magnetkupplung bei Rührkesseln entfallen.

Das Reaktionsvolumen des Schlaufenreaktors wird in der Regel über eine dichtungsfreie geschlossene Pumpe umgewälzt, beispielsweise über eine Spaltrohrmotorpumpe. Sobald die Reaktion beim erfindungsgemäßen Verfahren angesprungen ist, kann der Wärmetauscher (W 1) von "Heizung" auf "Kühlung" umgestellt werden. Durch den externen Wärmetauscher (W 1) kann man die Temperaturführung der Reaktion sehr viel effizienter gestalten. Dieses ist ein Vorteil gegenüber dem üblichen Rührkesselverfahren, wo an den Wandungen ein relativ schlechter Wärmeaustausch stattfindet.

Summarisch kann gesagt werden, dass mit dem erfindungsgemäßen Verfahren sehr viel günstiger durchmischter Hochdruckreaktionsraum als bisher bereitgestellt werden kann. Dieses resultiert insbesondere auch in Einsparungen von Investitionskosten in einer Höhe von bis zu 30 %.

## Patentansprüche

1. Verfahren zur Herstellung eines Aminoalkylsilans der allgemeinen Formel I
H₂N-(CH₂)_{y}-Si(OR)₃₋ₙR¹ₙ (I),
mit
R = Alkylrest mit 1 bis 8 C-Atomen oder Arylrest,
R¹ = Alkylrest mit 1 bis 8 C-Atomen oder Arylrest,
y = 2 oder 3 oder 4 und
n = 0 oder 1 oder 2 oder 3,
durch Umsetzung eines Chloralkylsilans der allgemeinen Formel II
Cl-(CH₂)_{y}-Si(OR)₃₋ₙR¹ₙ (II),
mit
R = Alkylrest mit 1 bis 8 C-Atomen oder Arylrest,
R¹ = Alkylrest mit 1 bis 8 C-Atomen oder Arylrest,
y = 2 oder 3 oder 4 und
n = 0 oder 1 oder 2 oder 3,
mit überschüssigem Ammoniak in flüssiger Phase und nachfolgender Aufarbeitung des Produktgemischs,
**dadurch gekennzeichnet,**
**dass** man die Umsetzung in einem Schlaufenreaktor durchführt.

2. Verfahren nach Anspruch 1,
**dadurch gekennzeichnet,**
**dass** man
- in einer ersten Verfahrensstufe das Chloralkylsilan mit überschüssigem Ammoniak in flüssiger Phase in einem Schlaufenreaktor umsetzt, Ammoniak unter vermindertem Druck abdampft, wobei ein wesentlicher Teil von überschüssigem Ammoniak entweicht und Ammoniumchlorid vollständig in der flüssigen Phase gelöst bleibt,
- das Produktgemisch aus der ersten Verfahrensstufe in eine zweite Verfahrensstufe, die auf einem niedrigeren Druckniveau als die erste Verfahrensstufe betrieben wird, überführt, Ammoniumchlorid auskristallisiert,
- nachfolgend kristallines Ammoniumchlorid vom Rohprodukt abtrennt und
- das Rohprodukt destillativ aufarbeitet.

3. Verfahren nach Anspruch 1 oder 2,
**dadurch gekennzeichnet,**
**dass** man die Umsetzung im Schlaufenreaktor bei einer Temperatur im Bereich von 80 bis 140 °C durchführt.

4. Verfahren nach einem der Ansprüche 1 bis 3,
**dadurch gekennzeichnet,**
**dass** man die Umsetzung im Schlaufenreaktor bei einem Druck von 40 bis 100 bar absolut durchführt.

5. Verfahren nach einem der Ansprüche 1 bis 4,
**dadurch gekennzeichnet,**
**dass** man die Komponenten Chloralkylsilan und Ammoniak in einem molaren Verhältnis von 1 : 10 bis 1 : 50 einsetzt.

6. Verfahren nach einem der Ansprüche 1 bis 5,
**dadurch gekennzeichnet,**
**dass** der Volumenkörper des Kreislaufreaktors (B 1) mit Strahldüsen ausgestattet ist.

7. Verwendung eines Schlaufenreaktors für die Herstellung eines Aminoalkylalkoxysilans gemäß Formel I durch Umsetzung eines Chloralkylsilans gemäß Formel II mit Ammoniak nach mindestens einem der Ansprüche 1 bis 6.

## Claims

1. A process for preparing an aminoalkylsilane of the formula I
H₂N-(CH₂)_{y}-Si(OR)₃₋ₙR¹ₙ (I)
with
R = alkyl radical with 1 to 8 C atoms or aryl radical,
R¹ = alkyl radical with 1 to 8 C atoms or aryl radical,
y = 2 or 3 or 4 and
n = 0 or 1 or 2 or 3,
by reacting a chloroalkylsilane of the formula II
Cl-(CH₂)_{y}-Si(OR)₃₋ₙR¹ₙ (II)
with
R = alkyl radical with 1 to 8 C atoms or aryl radical,
R¹ = alkyl radical with 1 to 8 C atoms or aryl radical,
y = 2 or 3 or 4 and
n = 0 or 1 or 2 or 3,
with excess ammonia in liquid phase and subsequent workup of the product mixture, **characterized in that** the reaction is carried out in a loop reactor.

2. A process according to claim 1, **characterized in that**
- in a first process stage the chloroalkylsilane is reacted with excess ammonia in liquid phase in a loop reactor, ammonia is vaporized under reduced pressure, during which a considerable part of the excess ammonia escapes and ammonium chloride remains completely dissolved in the liquid phase,
- the product mixture from the first process stage is transferred into a second process stage which is operated at a lower level of pressure than the first process stage, ammonium chloride crystallizes out,
- subsequently crystalline ammonium chloride is removed from the crude product and
- the crude product is worked up by distillation.

3. A process according to either of claims 1 and 2, **characterized in that** the reaction in the loop reactor is carried out at a temperature in the range from 80 to 140°C.

4. A process according to any one of claims 1 to 3, **characterized in that** the reaction in the loop reactor is carried out under a pressure of from 40 to 100 bar absolute.

5. A process according to any one of claims 1 to 4, **characterized in that** the components chloroalkylsilane and ammonia are employed in a molar ratio of from 1:10 to 1:50.

6. A process according to any one of claims 1 to 5, **characterized in that** the volume element of the circulating reactor (B 1) is equipped with jets.

7. Use of a loop reactor for preparing an aminoalkylalkoxysilane of formula I by reacting a chloroalkylsilane of formula II with ammonia according to at least one of claims 1 to 6.

## Revendications

1. Procédé de préparation d'un aminoalkylsilane répondant à la formule générale I
H₂N-(CH₂)_{y}-Si(OR)₃₋ₙR¹ₙ (I)
où
R = reste alkyle comportant de 1 à 8 atomes C ou reste aryle
R¹ = reste alkyle comportant de 1 à 8 atomes C ou reste aryle
y = 2 ou 3 ou 4
n = 0 ou 1 ou 2 ou 3
par décomposition d'un chloroalkylsilane répondant à la formule générale II
Cl-(CH₂)_{y}-Si(OR)₃₋ₙR¹ₙ (II)
où
R = reste alkyle comportant de 1 à 8 atomes C ou reste aryle
R¹ = reste alkyle comportant de 1 à 8 atomes C ou reste aryle
y = 2 ou 3 ou 4
n = 0 ou 1 ou 2 ou 3
avec de l'ammoniac excédentaire en phase liquide et avec récupération consécutive du mélange de produits,
**caractérisé en ce qu'**
on effectue la décomposition dans un réacteur à boucles.

2. Procédé selon la revendication 1,
**caractérisé en ce que**
- dans une première phase du procédé, on décompose le chloroalkylsilane avec de l'ammoniac excédentaire en phase liquide dans un réacteur à boucles, et on fait évaporer l'ammoniac sous pression réduite, à la suite de quoi une partie importante de l'ammoniac excédentaire s'échappe et le chlorure d'ammonium reste entièrement dissous dans la phase liquide ;
- on transfère le mélange de produits provenant de la première phase du procédé vers une seconde phase du procédé, laquelle fonctionne à un niveau de pression plus bas que la première, et on fait cristalliser le chlorure d'ammonium ;
- ensuite, on sépare le chlorure d'ammonium cristallin du produit brut ;
- enfin, on récupère le produit brut par distillation.

3. Procédé selon la revendication 1 ou 2,
**caractérisé en ce qu'**
on effectue la décomposition dans le réacteur à boucles à une température située entre 80 et 140°C.

4. Procédé selon l'une des revendications 1 à 3,
**caractérisé en ce que**
l'on effectue la décomposition dans le réacteur à boucles sous une pression de 40 à 100 bar absolus.

5. Procédé selon l'une des revendications 1 à 4,
**caractérisé en ce qu'**
on utilise les composants, chloroalkylsilane et ammoniac, dans un rapport molaire de 1 : 10 à 1 : 50.

6. Procédé selon l'une des revendications 1 à 5,
**caractérisé en ce que**
le corps volumique du réacteur de recyclage (B1) est équipé d'éjecteurs.

7. Utilisation d'un réacteur à boucles pour la préparation d'un aminoalkyloxosilane selon la formule I, par mise en oeuvre d'un chloroalkylsilane selon la formule II avec de l'ammoniac, suivant au moins l'une des revendications 1 à 6.
